Europäisches Patentamt

European Patent Office

Office européen des brevets

(11) Veröffentlichungsnummer: **0 224 669**
**A2**

(12) **EUROPÄISCHE PATENTANMELDUNG**

(21) Anmeldenummer: 86112775.1

(22) Anmeldetag: 16.09.86

(51) Int. Cl.⁴: **B23K 9/28** , B23K 9/18

(30) Priorität: 23.11.85 DE 3541417

(43) Veröffentlichungstag der Anmeldung:
10.06.87 Patentblatt 87/24

(84) Benannte Vertragsstaaten:
DE FR GB IT NL SE

(71) Anmelder: **MAN GUTEHOFFNUNGSHÜTTE GMBH**
**Bahnhofstrasse, 66 Postfach 11 02 40**
**D-4200 Oberhausen 11(DE)**

(72) Erfinder: **Becker, Reinhold**
**Jägerstrasse 197**
**D-4200 Oberhausen 11(DE)**
Erfinder: **Engel, Ulrich**
**Danzigerstrasse 18**
**D-4200 Oberhausen 1(DE)**

(54) **Vorrichtung zum Unterpulverschweissen mit mehreren in Schweissrichtung nebeneinander oder hintereinander angeordneten Drahtelektroden.**

(57) Bei einer Unterpulver-Schweißvorrichtung mit mehreren Drahtelektroden werden eine beliebige Anzahl Drahtelektroden (D) in geringem Abstand zueinander von einer entsprechenden Anzahl, gegebenenfalls in mehreren Ebenen übereinander angeordneten, angetriebenen Vorschubrollen (6) gegen die jeweils druckbeaufschlagten Gegenrollen (7) wirken, über ein an die Vorschubeinrichtung (I) angeflanschtes Schweißschwert (II) geführt. Die Drahtelektroden (D) sind untereinander durch isolierte Führungsrohre (15) getrennt. Zur Sicherstellung der Schweißstromübertragung von der am Schweißschwertende angebrachten auswechselbaren Strombacke (12) zu den Drahtelektroden (D) werden diese mit einstellbaren druckbeaufschlagten Hebeln (18) an die Strombacke (12) gedrückt.

Fig. 2

EP 0 224 669 A2

## Vorrichtung zum Unterpulverschweißen mit mehreren in Schweißrichtung nebeneinander oder hintereinander angeordneten Drahtelektroden

Die Erfindung betrifft eine Vorrichtung zum Unterpulver(UP)-Schweißen, wie Verbindungs-, Auftrags-und Formschweißen mit mehreren Drahtelektroden.

Zum UP-Schweißen sind Schweißvorrichtung verschiedenster Art bekannt, beispielsweise Schweißköpfe mit zwei bzw. drei in Schweißrichtung nebeneinander an einem Ausleger befestigten beweglichen Drahtelektroden. Andererseits sind Schweißvorrichtung bekannt, die mit mehreren Drahtelektroden in Tandemanordnung arbeiten.

Der Abstand der einzelnen Drahtelektroden untereinander ist jedoch bei den bekannten UP-Mehrdraht-Schweißvorrichtungen relativ groß und die Anzahl der in einer Vorrichtung angeordneten Drahtelektroden begrenzt, so daß die Abschmelzleistung bei Formschweißen breiter Werkstücke unbefriedigend ist.

Aus diesem Grunde werden zum Auftrags-und Formschweißen vielfach Schweißvorrichungen eingesetzt, bei denen anstelle des Mehrdrahtsystems Eletrodenbänder, die von einer Bandspule abgerollt werden, verwendet.

Mit dem Elektrodenband-UP-Schweißverfahren ist das Schweißen in praktisch . beliebiger Schweißbreite möglich, doch ist zum einen die Handhabung von breiten Bändern infolge des großen Durchmessers der Bandspule schwierig. Außerdem ist eine umfangreiche Lagerhaltung erforderlich, da für jede vorgesehene Schweißbreite ein entsprechendes Elektrodenband vorrätig gehalten werden muß. Hinzu kommt, daß bei der Lagerhaltung die Gefahr der Korrosion der Elektrodenbänder auftreten kann. Schließlich weist das Formschweißen mit Elektrodenbändern den Nachteil der niedrigen Einbrandtiefe auf, wodurch sich die Fehlerhäufigkeit im Überlappungsbereich erhöht, d.h. Binde-und Schlackenfehler auftreten können.

Aufgabe der Erfindung ist es, eine kompakte Vorrichtung zum Mehrdraht-UP-Schweißen anzubieten, bei der auf engstem Raum eine Vielzahl von Drahtelektroden angeordnet werden können, und die hinsichtlich des Drahtelektrodenvorschubs, · der Elektrodenzuführung zur Strombacke eine optimale zuverlässigkeit, Kontinuität und Gleichmäßigkeit gewährleistet, so daß mit einer derartigen Schweißvorrichtung die Erzielung eines kontinuierlichen Schweißbades und einer hohen - schweißleistung erreicht wird.

Die der Erfindung zugrundeliegende Aufgabe wird durch eine Vorrichtung gelöst, wie sie im Kennzeichen des Hauptanspruchs beschrieben ist. Die weitere Ausgestaltung der erfindungsgemäßen Vorrichtung ist in den Unteransprüchen gekennzeichnet.

Bei der Anordnung einer Vielzahl von Drahtelektroden auf engstem Raum ist der Abstand der einzelnen Elektroden untereinander durch Verzweigung der Vorschubeinrichtung in zwei oder mehr Ebenen, die untereinander angeordnet sind, fast beliebig verringerbar.

Über eine gemeinsame Schweißstromzuführung wird jede einzelne Drahtelektrode gezielt versorgt. Die Führung der Drahtelektroden von der Einfädelöffnung am Schweißschwert bis zum Schweißschwertende ist elektrisch isoliert, damit dei Schweißstromübertragung tatsächlich nur über die Strombacke am Elektrodenende erfolgt.

Anhand der schematischen Zeichnungen wird ein Ausführungsbeispiel einer erfindungsgemäßen Schweißvorrichtung mit in Schweißrichtung nebeneinander angeordneten Drahtelektroden näher erläutert.

Es zeigen:

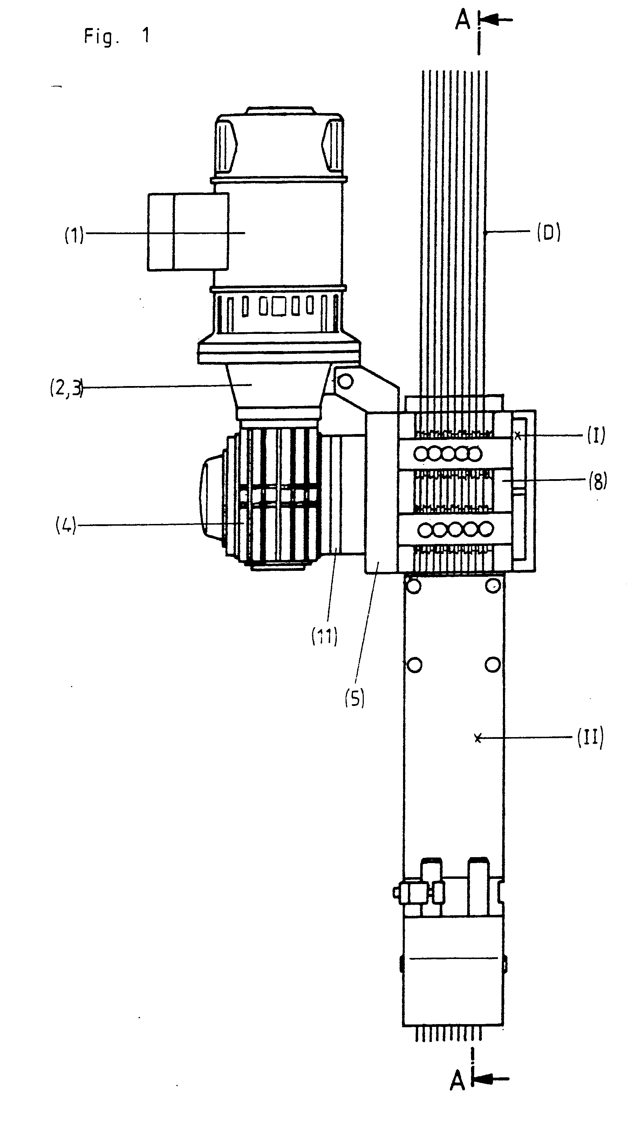

Fig. 1 eine Vorderansicht der Schweißvorrichtung und

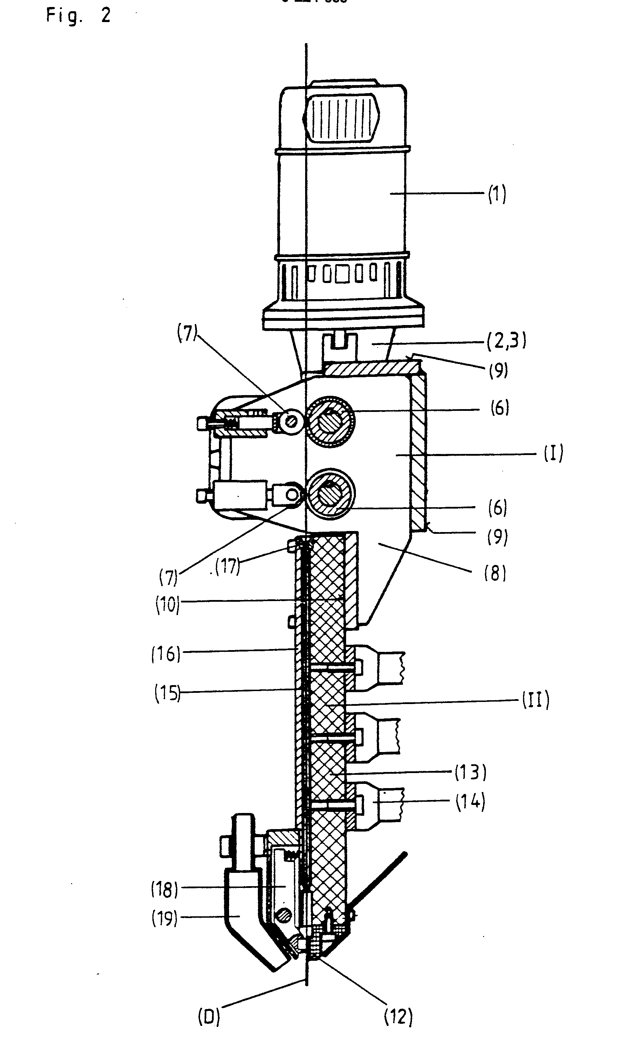

Fig. 2 einen Schnitt längs der Linie A-A gemäß Fig. 1.

Die Schweißvorrichtung besteht aus der Baugruppe (I, Vorschubeinrichtung) und der Baugruppe (II, Schweißschwert).

Der Vorschub der Drahtelektroden (D) erfolgt mit Hilfe der 10-Draht-Vorschubeinrichtung (I). Im Ausführungsbeispiel ist als Antrieb für die Vorschubeinrichtung ein mit einer Motorlaterne (3) angeflanschter drehzahlregelbarer Gleichstrom-Nebenschluß-Motor (1) mit Kupplung (2) und Schneckengetriebe (4) vorgesehen. Die Antriebs-Rotationsbewegung wird in einem Zwischengetriebe (5) auf zwei je fünf Drahtelektroden antreibende, übereinander angeordnete Vorschubrollen (6) verzweigt.

Mit einstellbaren, druckbeaufschlagten Gegenrollen (7) werden die Drahtelektroden (D) in die verzahnten, angetriebenen Vorschubrollen (6) gedrückt. Im Ausführungsbeispiel sind die Gegenrollen (7) federdruckbeaufschlagt. Mit Hilfe der Gegenrollen (7) können Durchmessertoleranzen der Drahtelektroden ausgeglichen werden.

Am Gehäuse (8) der Vorschubeinrichtung sind zwei Flanschflächen (9) vorgesehen, an die Verstelleinrichtungen, wie beispielsweise Schweißausleger, angeschlossen werden können.

Am Gehäuse (8) befindet sich eine weitere Flanschfläche (10), an der das Schweißschwert (II) angebracht ist.

Der Antriebsmotor (1) für die Vorschubeinrichtung (I) ist vom Gehäuse (8) und den Antriebsübertragungselementen im Zwischengetriebe (5) durch isolierende Bauteile (z.B. 11) elektrisch getrennt.

Die Schweißstromübertragung auf die Drahtelektroden (D) erfolgt bei dem dargestellten 10-Draht-Schweißschwert (II) über eine mit Führungsrillen versehene auswechselbare Strombacke (12), die am Schweißschwertkörper (13) angebracht ist.

Der Schweißschwertkörper (13), der aus Kupfer hergestellt sein kann, besitzt eine Anschlußfläche für Schweißstromkabel (14).

Die Drahtelektroden (D) sind im Schweißschwert (II) gegeneinander isoliert untergebracht. Im Ausführungsbeispiel geschieht dies durch Keramik-Führungsrohre (15), die sich in einem Deckel (16) befinden, der mit dem Schweißschwertkörper (13) lösbar verbunden ist. Durch eine Lochschiene, die ebenfalls isoliert ausgeführt ist, wird das Einführen der Drahtelektroden (D) in die Führungsrohre (15) erleichtert.

Um die Schweißstromübertragung von der kupfernen Strombacke (12) zu den einzelnen Drahtelektroden (D) sicherzustellen, werden die Drahtelektroden mit Hilfe von einstellbaren, druckbeaufschlagten Hebeln (18) in die in der Strombacke (12) eingearbeiteten Führungsrillen gedrückt.

Die Zuführung des Schweißpulvers erfolgt über einen Pulvertrichter (19).

Oberhalb der Vorschubeinrichtung (I) ist eine (nicht dargestellte) Drahtrichtvorrichtung angeordnet. Als solche eignet sich beispielsweise das Drahtrichtwerk nach der deutschen Patentanmeldung P 35 11 767.2.

Alternativ zur Anordnung der Drahtelektroden in Schweißrichtung nebeneinander kann die erfindungsgemäße Schweißvorrichtung bei entsprechender Abwandlung für das Schweißen mit in Schweißrichtung hintereinander angeordneten Drahtelektroden verwendet werden.

Die erfindungsgemäße Schweißvorrichtung ist selbstverständlich nicht auf die Verwendung als 10-Draht-Vorrichtung nach dem Ausführungsbeispiel beschränkt. Derartige Schweißvorrichtungen lassen sich demnach auch für mehr oder weniger Drahtelektroden verwenden.

## Ansprüche

1. Vorrichtung zum Unterpulver (UP)-Schweißen, wie Verbindungs-, Auftrags-und Formschweißen mit mehreren Drahtelektroden, gekennzeichnet durch eine Vorschubeinrichtung (I) für den kontinuierlichen gleichmäßigen Vorschub einer Mehrzahl von mit geringem Abstand nebeneinander angeordneten Drahtelektroden (D) beliebigen Durchmessers mittels einzeln einstellbarer druckbeaufschlager Gegenrollen (7), die die Drehtelektroden in verzahnten Führungsrillen von angetriebenen Vorschubrollen (6) drücken, einem Schweißschwert (II) mit isolierter Führung (15) der Drahtelektroden zur auswechselbaren Strombacke (12) und einer einstellbaren Andrückeinrichtung (18) für die Drahtelektroden an die Strombacke (12) zur gezielten Schweißstromübertragung auf jede Drahtelektrode, ferner einer Pulverzuführung über Pulvertrichter (19).

2. Vorrichtung nach Anspruch 1, dadurch gekennzeichnet, daß die Drahtelektroden-Vorschubeinrichtung (I) je nach Anzahl der Drahtelektroden (D) in mehreren Ebenen untereinander angeordnet ist.

3. Vorrichtung nach den Ansprüchen 1 und 2, dadurch gekennzeichnet, daß die Vorschubeinrichtung (I) von einem drehzahlregelbaren Motor (1) über Kupplung (2) und Schneckengetriebe (4) angetrieben wird, wobei durch ein Zwischengetriebe (5) die Antriebs-Rotationsbewegung auf die Vorschubrollen (6) erfolgt.

4. Vorrichtung nach Anspruch 3, dadurch gekennzeichnet, daß der Antrieb gegenüber der Vorschubeinrichtung (I) durch isolierende Bauteile (11) elektrisch getrennt ist.

5. Vorrichtung nach Anspruch 1, dadurch gekennzeichnet, daß innerhalb des Schweißschwertes (II) isolierende Führungsrohre (15) für die Drahtelektroden (D) angeordnet sind.

6. Vorrichtung nach Anspruch 5, dadurch gekennzeichnet, daß die Führungsrohre (15) aus keramischem Werkstoff bestehen.

7. Vorrichtung nach Anspruch 1, dadurch gekennzeichnet, daß die Andrückeinrichtung zur Schweißstromübertragung auf die Drahtelektroden (D) aus einstellbaren druckbeaufschlagen Hebeln (18) zum Eindrücken der Drahtelektroden in die Führungsrillen der Strombacke (12) besteht.

8. Vorrichtung nach Anspruch 1, dadurch gekennzeichnet, daß am Gehäuse (8) der Vorschubeinrichtung (1) Flanschflächen (9) zur Anordnung von Schweißauslegern vorgesehen sind.

Fig. 1

Fig. 2

0 224 669

Fig. 2